# EUROPEAN PATENT SPECIFICATION

(11) **EP 3 961 460 B1**
(45) Date of publication and mention of the grant of the patent: **30.08.2023**
(21) Application number: 21182353.9
(22) Date of filing: 29.06.2021
(51) Int. Cl.: G06F 21/64

(54) **METHODS, BLOCKCHAIN NODES AND STORAGE MEDIA FOR DEPLOYING SMART CONTRACT**
VERFAHREN, BLOCKCHAINKNOTEN UND SPEICHERMEDIEN FÜR DEN EINSATZ EINES INTELLIGENTEN VERTRAGS
PROCÉDÉS, NOEUDS DE CHAÎNE DE BLOCS ET SUPPORTS D'ENREGISTREMENT POUR DÉPLOYER UN CONTRAT INTELLIGENT

(30) Priority: 31.08.2020 CN 202010899200
(43) Date of publication of application: 02.03.2022
(73) Proprietor: Alipay (Hangzhou) Information Technology Co., Ltd., Hangzhou, Zhejiang 310000 (CN)
(72) Inventor: LIU, Qi, Hangzhou, Zhejiang, 310000 (CN)
(74) Representative: Goddar, Heinz J.

(56) References cited:
- US-A1- 2019 324 772
- US-A1- 2020 167 503
- US-B1- 10 649 749

## Description

### TECHNICAL FIELD

The present specification relates to the field of blockchain technologies, and in particular, to methods, blockchain nodes and storage media for deploying a smart contract.

### BACKGROUND

Blockchain is a new application mode of computer technology such as distributed data storage, point-to-point transmission, consensus mechanism, and encryption algorithm. In blockchain 2.0 era, smart contract is introduced so that the scope of application of blockchain is raised to a new level. With smart contacts, what the blockchain can do is not only making a single money-transfer transaction, but also invoking a piece of code which is user customizable Patent document US2020/167503 is considered relevant prior art.

### SUMMARY

The present specification is to provide methods, blockchain nodes and storage media for deploying a smart contract. The invention is defined by the indepenent claims.

The methods and blockchain nodes for deploying a smart contract, and the storage media provided by embodiments of the present specification are implemented in the following manner:

Provided is a method for deploying a smart contract, including:
receiving, by a blockchain node, a transaction for creating the smart contract, wherein the transaction includes a machine code of the smart contract, and the machine code is obtained by AoT compilation of a bytecode of the smart contract;
completing, by the blockchain node, a deployment of the smart contract in response to determining that an initiator account of the transaction is a predefined trusted account.

Provided is a blockchain node for deploying a smart contract, configured to implement the above-mentioned method.

Provided is a blockchain node for deploying a smart contract, including:
a processor, and
a memory having programs stored thereon, wherein the programs are executed by the processor to implement the above-mentioned method.

Provided is a storage media for storing programs, wherein the programs are executed to perform operations in the above-mentioned method.

With the above-mentioned embodiments of the present specification, before a smart contract is deployed to the blockchain, a bytecode of the smart contract is converted into a corresponding machine code through AoT compilation in advance, enabling the machine code of the smart contract to be deployed directly on the blockchain so that efficient operation can be achieved based on the deployed machine code when the smart contract is to be invoked. Due to the feature of the machine code, the machine code can perform far more operations than the bytecode, which will also bring more risks, such as the leakage of private data stored in blockchain nodes, the stable operation of blockchain nodes being affected. Therefore, for a transaction for creating a smart contract, the previously mentioned risks can be reduced or eliminated by limiting an initiator account of the transaction to a predefined trusted account, and endorsement of the trusted account over the security of a machine code, so as to prevent non-trusted accounts from arbitrarily deploying the smart contract in the form of the machine code.

### BRIEF DESCRIPTION OF THE DRAWINGS

FIG. 1 is a schematic diagram illustrating compilation execution and interpretation execution according to an embodiment.
FIG. 2 is a schematic diagram illustrating interpretation execution and JIT compilation according to an embodiment.
FIG. 3 is an illustrative process representing the creation of a smart contract according to an embodiment.
FIG. 4 is an illustrative process representing the invoking of a smart contract according to an embodiment.
FIG. 5 is a schematic diagram illustrating the creation and invoking of a smart contract according to an embodiment.
FIG. 6 is a flowchart illustrating the deployment of a smart contract according to an embodiment.
FIG. 7 is a block diagram illustrating a blockchain node according to an embodiment.
FIG. 8 is a schematic diagram illustrating the creation and invoking of a smart contract according to another embodiment.
FIG. 9 is a schematic diagram illustrating the execution process of a virtual machine included in the process of creation and invoking of a smart contract according to an embodiment.

### DETAILED DESCRIPTION OF THE EMBODIMENTS

The example embodiments are described in detail herein, and are illustratively shown in the drawings. When the following description refers to the drawings, unless otherwise indicated, the same numbers in different drawings indicate the same or similar elements. The embodiments described in the following example embodiments do not represent all embodiments consistent with one or more embodiments of the present specification. On the contrary, they are merely embodiments of devices and methods consistent with some aspects of one or more embodiments of the present specification described in detail in the appended claims.

It should be noted that, in other embodiments, the steps of the corresponding method are not necessarily performed in the order shown and described herein. In some other embodiments, the method can include more or fewer steps than described herein. Moreover, a single step described in the present specification can be divided into multiple steps for description in other embodiments; and multiple steps described in the present specification can be combined into a single step for description in other embodiments.

The Blockchain 1.0 era usually refers to the development stage of blockchain applications represented by bitcoin between 2009 and 2014, and mainly focuses on solving the problem of decentralization of currency and payment means. Since 2014, developers have paid more and more attention to solving deficiencies of bitcoin in terms of technology and scalability. In late 2013, Vitalik Buterin released an Ethereum white paper, "Ethereum: A next-generation smart contract and decentralized application platform", which introduced smart contracts into blockchain and opened the application of the blockchain outside the monetary field, thus opening the era of Blockchain 2.0.

A smart contract is a computerized protocol that can automatically execute based on specified trigger rules, and can also be regarded as a digital version of a traditional contract. The concept of smart contracts was first proposed in 1994 by Nick Szabo, an interdisciplinary legal scholar and cryptography researcher. This technology was once not used in the practical industry due to the lack of programmable digital systems and related technology until the emergence of blockchain technology and Ethereum which provided a secure execution environment. Due to a blockchain-type ledger adopted by the blockchain technology, generated data cannot be tampered with or deleted, and the entire ledger will continuously add ledger data, thus ensuring traceability of historical data; moreover, the decentralized operation mechanism avoids the influence of centralized factors. Smart contracts based on blockchain technology can not only give full play to advantages of the smart contracts in terms of cost and efficiency, but also avoid interference of malicious acts on normal execution of contracts. The smart contract is written into the blockchain in a digital form, and the characteristics of the blockchain technology ensure that the whole process of storage, reading and execution is transparent, traceable and cannot be tampered with.

The smart contract is essentially a program that can be executed by a computer. Like computer programs widely used now, smart contracts can be written in high-level languages (such as C language, C + + language, etc.). A program code of a smart contract written in high-level languages can generally be converted into "a machine code" that can be recognized and run by a CPU of the computer through a "compiler", and then such machine code (or "microprocessor instruction") can be executed by the CPU. This mode is generally invoked "compilation execution".

The compilation execution is generally not scalable across platforms. Because there are different manufacturers, different brands and different generations of CPUs, instruction sets supported by these different CPUs are different in many cases, such as x86 instruction set, ARM instruction set, etc., and the instruction sets supported by CPUs of different generations but the same manufacturer and the same brand (such as different generations of Intel CPUs) are not exactly the same. Therefore, the same program code written in the same high-level language may be converted into different machine codes by compilers on different CPUs. Specifically, in a process of converting a program code written in high-level languages into a machine code, a compiler will optimize in combination with the characteristics of specific CPU instruction sets (such as vector instruction sets, etc.) to improve the speed of program execution, and such optimization is often related to specific CPU hardware. In this way, one of the same machine codes can be run on x86, but the other may not be run on ARM; even for the same x86 platform, with the passage of time, the instruction set is constantly enriched and extended, which leads to that machine codes run on different generations of x86 platforms are different. Moreover, because the execution of a machine code needs the CPU to be scheduled by an operating system kernel, even with the same hardware, the machine code supported to be run under different operating systems may be different.

Different from the compilation execution, there is also a program operation mode of "interpretation execution". For example, the Java language compiles a Java source code into a standard bytecode through a Java compiler, where the compiler is not aimed at an instruction set of any actual hardware processor, but defines a set of abstract standard instruction sets. The compiled standard bytecode generally cannot run directly on the hardware CPU, so a virtual machine, namely JVM, is introduced, which runs on a specific hardware processor to interpret and execute the compiled standard bytecode.

JVM is an abbreviation of Java Virtual Machine, which is a kind of fictional computer, and usually can be realized by simulating various computer functions on actual computers. JVM shields information related to specific hardware platforms, operating systems, etc., so that Java programs can be run on a plurality of platforms without modification by only generating a standard bytecode that can be run on Java virtual machines.

A very important feature of the Java language is platform irrelevance. And using the Java virtual machines is the key to realize this feature. If a general high-level language is to be run on different platforms, at least it needs to be compiled into different target codes. After the introduction of the Java language virtual machine, the Java language does not need to be recompiled when it is run on different platforms. The Java language shields information related to specific platforms by using the Java virtual machine, so that a Java language compiler program can be run on various platforms without modification by generating only the target code (bytecode) run on the JVM. When the Java virtual machine executes the bytecode, the Java virtual machine interprets the bytecode as a machine instruction on a specific platform to execute. This is why Java can be written once and run anywhere.

JVM runs on a specific hardware processor and is responsible for interpreting and executing a bytecode for the specific processor run by the JVM, shielding these underlying differences upward and presenting to developers with standard development specifications. When the JVM executes a bytecode, the JVM actually finally interprets the bytecode as a machine instruction on a specific platform to execute. Specifically, after receiving an input bytecode, the JVM interprets each instruction in the bytecode statement by statement and translates the instruction into a machine code suitable for the current machine to run. These processes are interpreted and executed by an Interpreter for example. In this way, developers who write Java programs do not need to consider which kind of hardware platform the written program code will be run on. The development of the JVM is accomplished by professional developers in Java organization to adapt the JVM to different processor architectures. Up to now, there are only a limited number of mainstream processor architectures, such as X86, ARM, RISC-V, and MIPS. After professional developers respectively port the JVM to platforms that support the specific hardware, Java programs can theoretically be run on all machines. The porting of the JVM is usually provided by professionals in Java development organization, which greatly reduces the burden on Java application developers.

The interpretation execution brings cross-platform portability, but because the execution of a bytecode goes through the process of JVM intermediate translation, the execution efficiency is not as high as the compilation execution efficiency, and the difference in efficiency can sometimes even reach dozens of times.

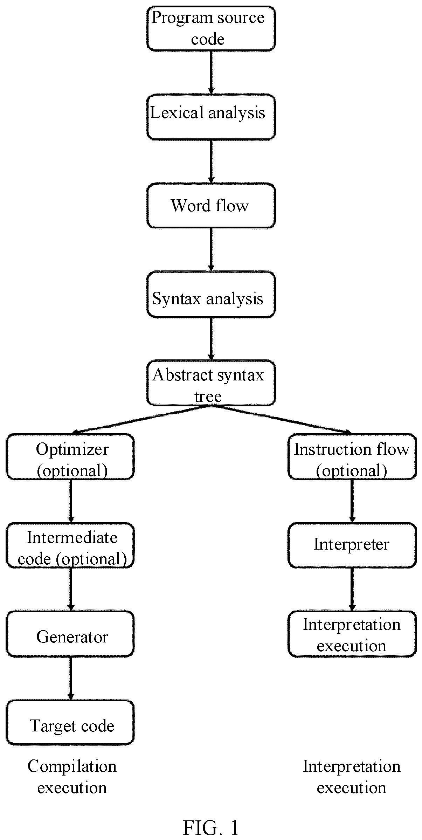

FIG. 1 shows similarities and differences between compilation execution and interpretation execution. Both interpretation execution and compilation execution, or both a physical machine and a virtual machine, it is impossible for a machine to read and understand an application program like a human, and then acquire the ability to execute. Most of program codes, before becoming into the target code of the physical machine or an instruction set which can be executed by the virtual machine, need to go through all the steps in FIG. 1. In FIG. 1, the branch from the top to the left is a generation process from a program code to a target machine code in traditional compilation principle, and the branch from the top to the right is a process of interpretation execution. Nowadays, most languages based on physical machines, Java virtual machines, or other High-Level Language Virtual Machines (HLLVMs) that are not Java will follow this idea based on modern classical compilation principles. Before execution, the program source code is processed with lexical analysis and syntax analysis to convert the source code into an Abstract Syntax Tree (AST). For the implementation of a specific language, lexical analysis, syntax analysis and even the following optimizer and target code generator can be selected to be independent of an execution engine to form a complete compiler to implement, which is represented by C or C++ language. Or, some of these steps (such as those steps before generating the AST) can be chosen to implement as a semi-independent compiler, which is represented by Java language. Or all these steps and the execution engine are concentrated encapsulated in a closed black box, such as most JavaScript executors.

In order to balance cross-platform portability and high performance as much as possible, the concept of Just-In-Time Compiler (JIT) was proposed. The core idea of the JIT is "how to efficiently avoid repetitive work of interpreting instructions". There are a large number of repeatedly executed codes in computer programs. For example, some computing "functions" may be invoked many times in a loop during the execution of a program. If it is interpretation execution, each execution of the loop process will translate this function from a bytecode to a machine code. However, the actual situation is that the machine code generated by this function in dozens of translations is exactly the same. Naturally, after the first translation, the machine code of the translated function is cached. In the subsequent re-execution process, the cached code is directly used without being repeatedly translated, which can improve the execution efficiency.

On the contrary, some functions are executed only once during a program running cycle (for example, boot initialization), then such functions do not need to be cached and can be directly interpretation executed once. Therefore, a core module in JIT technology is "hotspot analysis", that is, by analyzing which codes have been executed many times in the process of program execution, so as to cache translated machine code of the codes. For operations with a less number of execution times, caching is not needed. In this way, a best balance between execution efficiency and memory overhead can be achieved.

In addition, another core module in the JIT technology is compilation optimization (or optimizing compilation). Directly translated machine codes are not optimized in conjunction with the context, and only high-frequency machine codes are cached, which is limited in performance improvement. For better performance, further optimizations can be made to a compiler. The way of compilation optimization generally takes relatively more time to implement.

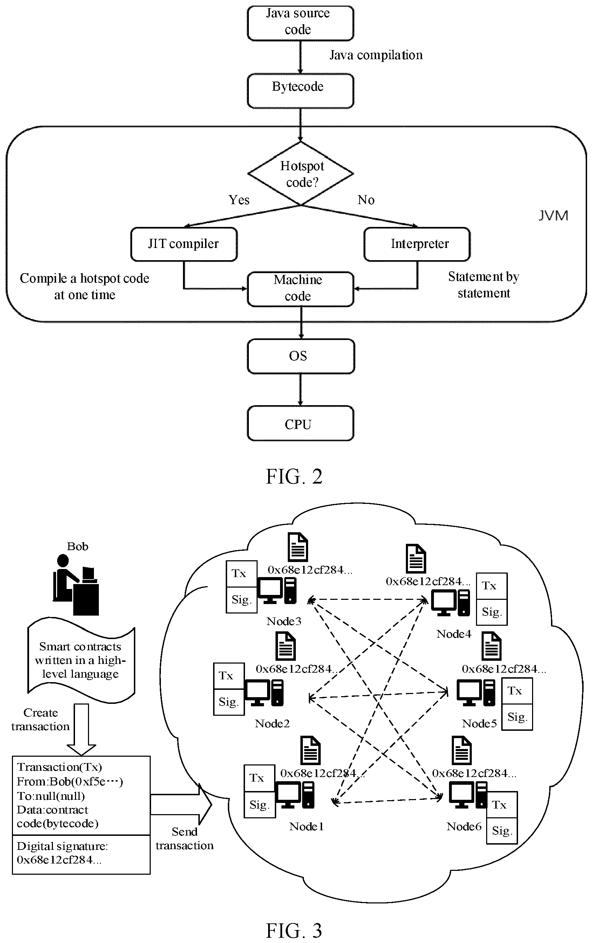

The working principle of the JIT is, for example, shown in FIG. 2. The Java source code is compiled by the Java compiler to generate a piece of Java bytecode, which is distributed to two execution paths (JIT Compiler and Interpreter) after hotspot analysis. A code determined as a hotspot (high frequency execution) is compiled in the JIT compiler to obtain a machine code, cached and executed, which is generally executed by a CPU under the control of an Operating System (OS). A code with low frequency accesses the Interpreter, where the code is translated into a machine code and then be executed by the CPU under the control of the OS.

Due to the correlation of backward and forward of the program code, there is often a large space for optimization in the compilation process. The execution efficiency of optimized machine code will be much higher than that of directly translated machine code. If better performance is to be obtained, optimization of a compiler is necessary. The compilation progress of the JIT Compiler may be time consuming. In particular, the JIT Compiler can take a long time to compile the bytecode for the first time, and is even more time-consuming than the interpretation execution. Then, for some java programs, if the hotspots are not very prominent, i.e. overall execution frequencies is not very high, while the overall execution process is long, it is difficult for the JIT to take advantage of the compilation execution.

In addition, another idea has been put forward, that is, AoT (Ahead of Time). AoT is equivalent to a pre-compiled execution way. A bytecode is compiled once for target execution environment before a program is run to obtain a machine code, which is then deployed to a target machine for execution. AoT can run as efficiently as compilation execution. But during the AoT, it is necessary to clearly know the hardware, the instruction set architecture and the system, etc. of a target system to ensure that the compiled code can be run. Furthermore, generally speaking, for instructions with the same function, the amount of statements needed to express in a machine code is greater than in a bytecode, and much greater than in a code written in a high-level language, in this way, for a program with the same content, it is likely that a size of the machine code > a size of the bytecode > a size of the high-level language code. The bytecode can be compiled into a machine code by AoT, in a case that the hardware, the instruction set architecture and the system, etc. of the target system are clearly known. Moreover, the machine codes for different types of target systems are different, so it may be necessary to provide different versions of machine codes in order that there can be corresponding correctly executed machine codes on the various target systems. In this way, a total size of the machine code will generally be larger than the size of the bytecode or high-level language code.

For example, Android uses the Dalvik virtual machine before version 5.0, and uses the ART virtual machine after the version 5.0. The Dalvik uses a JIT compiler to interpret the bytecode, while ART uses an AoT mechanism. The ART manner pre-compiles a bytecode (the installation process of an Android App is actually installing the bytecode of a program) to a machine code at the time of installing an App. After removing the process of interpreting code, applications on the Android can be executed more efficiently and started faster.

As a decentralized distributed system, the blockchain needs to maintain distributed consistency. Specifically, for a set of nodes in a distributed system, each node has a built-in state machine. Each state machine needs to execute the same instructions in the same order from the same initial state, and keep each change of state the same, thus ensuring that a consistent state is eventually reached. However, it is difficult for all node devices participating in the same blockchain network to have the same hardware configuration and software environment. Therefore, in Ethereum which is the representative of Blockchain 2.0, a virtual machine similar to the JVM, the Ethereum Virtual Machine (EVM), is used in order to ensure that the process and results of executing smart contracts are the same on each node. The differences in hardware configuration and software environment of each node can be shielded with the EVM. In this way, a developer can develop a set of code for a smart contract and upload the compiled bytecode to the blockchain after the code of the smart contract is compiled locally by the developer. When each node interprets and executes the same bytecode through the same EVM in the same initial state, the node can obtain the same final result and the same intermediate result, and can shield the differences of underlying hardware and environment between different nodes. In this way, the emergence of decentralized blockchain technology has enabled the implementation of the smart contracts proposed as early as 1994, and, because the implementation of decentralization inevitably faces differences in the hardware and operating environment of different execution machines, furthermore, the smart contract is processed by interpretation execution to ensure that the same execution results can be obtained on decentralized machines with different hardware and operating environment.

The EVM is a Turing complete virtual machine, which means that various complex logic can be implemented through the EVM. This is also one of the biggest improvements of the Ethereum as a representative of the Blockchain 2.0 over the Blockchain 1.0. A smart contract that the users publish or invoke in the Ethereum can be run on the EVM. As mentioned earlier, the EVM directly runs a bytecode, and smart contracts deployed on the blockchain can be in a form of the bytecode.

As shown in FIG. 3, after Bob sends a transaction containing information about the creation of a smart contract to the Ethereum network, the EVM of node 1 can execute the transaction and generate a corresponding contract instance. The "data" field of the transaction can store a bytecode, and the "to" field of the transaction can be a null address. Once the nodes reach an agreement through a consensus mechanism, the contract is successfully created and can be invoked by users subsequently.

When the contract is created, a contract account corresponding to the smart contract appears on the blockchain, which has a specific address, and the contract code and the account storage can be stored in the contract account. The behavior of the smart contract is controlled by the contract code, while the account storage of the smart contract stores a state of the contract. In other words, the smart contract enables the creation of a virtual account containing the contract code and account storage on the blockchain.

As mentioned above, the "data" field which includes the transaction for creating a smart contract can store a bytecode of the smart contract. The bytecode includes a series of bytes, and each byte can indicate an operation. Instead of writing a bytecode directly, developers can choose a high-level language to write smart contract code, based on various considerations such as development efficiency and readability, etc. The smart contract code written in the high-level language is compiled by a compiler to generate a bytecode, and then the bytecode can be deployed on the blockchain. There are many high-level languages supported by the Ethereum, such as Solidity, Serpent, LLL language, etc.

Taking the Solidity as an example, a contract written in the Solidity language is very similar to a class in the object-oriented programming language, and a variety of members can be declared in one contract, including state variables, functions, function modifiers, events, etc. The state variables are values permanently stored in the account storage of the smart contract and are used to save the state of the contract.

The following is Example 1 of a simple smart contract code written in the Solidity language:

```
    Contract Example{
        int balance;
        function C(){
            balance + = 1;
       }
       function getbalance() returns(int){
            return balance ;
       }
    }
```

}}Generally, when the contract is deployed in the blockchain, the state variable "balance" can be a kind of asset type newly defined in the contract. The function C() can define a change operation of the balance, and the function getbalance() returns(int) can define an operation that gets the current value of the balance and returns.

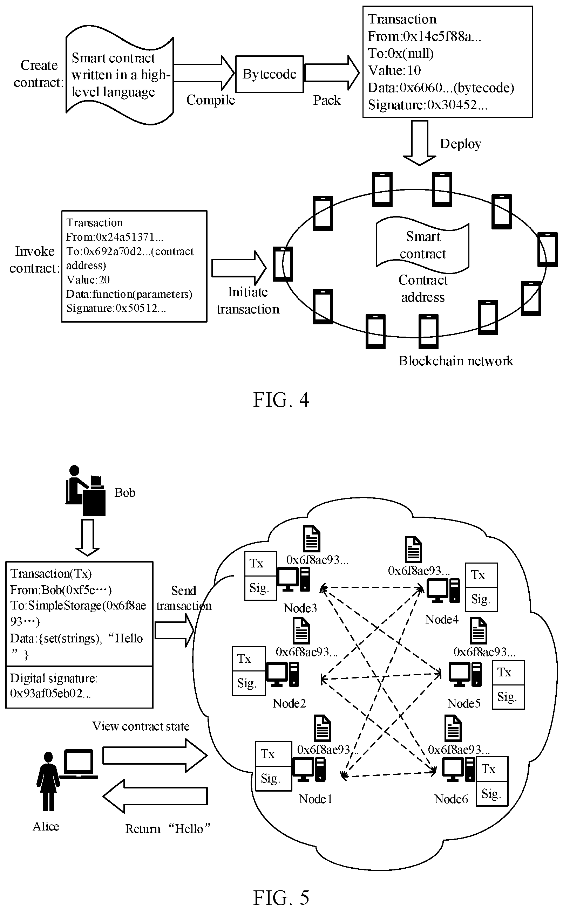

Furthermore, as shown in FIG. 4, still using the Ethereum as an example, after Bob sends a transaction containing information about invoking a smart contract to the Ethereum network, the EVM of node 1 can execute the transaction and generate a corresponding contract instance. In FIG. 4, the "from" field of the transaction indicates the address of the account that initiated the invoke to the smart contract, the "0x692a70d2..." in the "to" field represents the address of the smart contract being invoked, the value field indicates the value of Ethers in Ethereum, and the "data" field of the transaction stores methods and parameters for invoking the smart contract. The value of balance may change after the smart contract is invoked. Subsequently, a client device can view the current value of balance via a blockchain node.

Smart contracts can be executed independently at each node in the blockchain network in a prescribed manner, with all execution records and data stored in the blockchain, so that when a transaction is completed, a credential of the transaction is stored on the blockchain that cannot be tampered with and will not be lost.

The diagram for creating a smart contract and invoking the smart contract is shown in FIG. 5. To create a smart contract in the Ethereum, the process of writing the smart contract, turning into bytecode, and deploying the smart contract to the blockchain, etc. needed to be completed. Invoking a smart contract in the Ethereum indicates initiating a transaction that points to the address of the smart contract (the address of the smart contract can be pointed to via the "to" field in the transaction), and a smart contract code is run distributed in a virtual machine of each node in the Ethereum network.

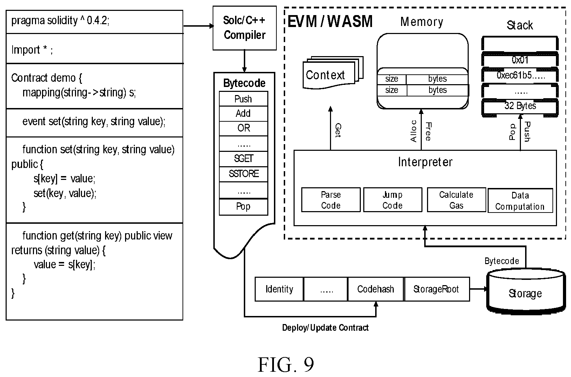

The transaction that creates the smart contract is sent to the blockchain network, and after consensus, the nodes of the blockchain node can execute the transaction. Specifically, it could be the EVM or WASM of the blockchain node that performs this transaction. As mentioned earlier, at this time, a contract account corresponding to the smart contract (including, for example, an identity of the account, Codehash of the contract, and StorageRoot of the contract) appears on the blockchain, the blockchain has a specific address, and the contract code and account storage can be stored in the Storage of the contract account, as shown in FIG. 9. The behavior of the smart contract is controlled by the contract code, while the account storage of the smart contract stores the state of the contract. In other words, smart contracts enable virtual accounts containing contract code and account storage to be created on the blockchain. The Codehash value can be generated or changed for contract deployment transactions or contract update transactions. Subsequently, the blockchain node can receive a transaction request for invoking the deployed smart contract, which can include the address of the invoked contract, the function in the invoked contract, and the input parameters. Generally, after consensus is performed on the transaction request, each node of the blockchain can each independently execute the smart contract specified for the invocation. Specifically, as shown in FIG. 9, the node can load a bytecode of the contract from the Storage into the virtual machine (EVM or WASM) based on the address of the contract; then, the bytecode is interpreted and executed by the Interpreter, which includes, for example, parsing the bytecode of the invoked contract to obtain an OPcode and storing the OPcode in the Memory of the virtual machine, at the same time the address of the invoked function can be obtained; when the amount of Gas needed to execute the contract is calculated and the Gas is enough, the corresponding address in the Memory is jumped to obtain the Opcode of the invoked function and starts to execute, and operations such as Data Computation and Push or Pop in Stack and the like are performed on the data operated by the Opcode of the invoked function, so as to complete the data computation. This process may also need some information about the Context of the contract, such as the block number, information of an initiator that invokes the contract, and the like, which can be obtained from the Context (Get operation). Finally, the generated state is stored in the Storage by invoking the Storage interface. It should be noted that the process of creating a contract may generate interpretation execution of certain functions in the contract, such as functions for initialization operations, which will also parse code, generate jump instructions, store in the Memory, and operate data in the Stack, etc. In the interpretation execution process, generally speaking, functions that are repeatedly executed are not cached, and even for functions that are executed many times, the virtual machine needs to repeat the parsing and executing process.

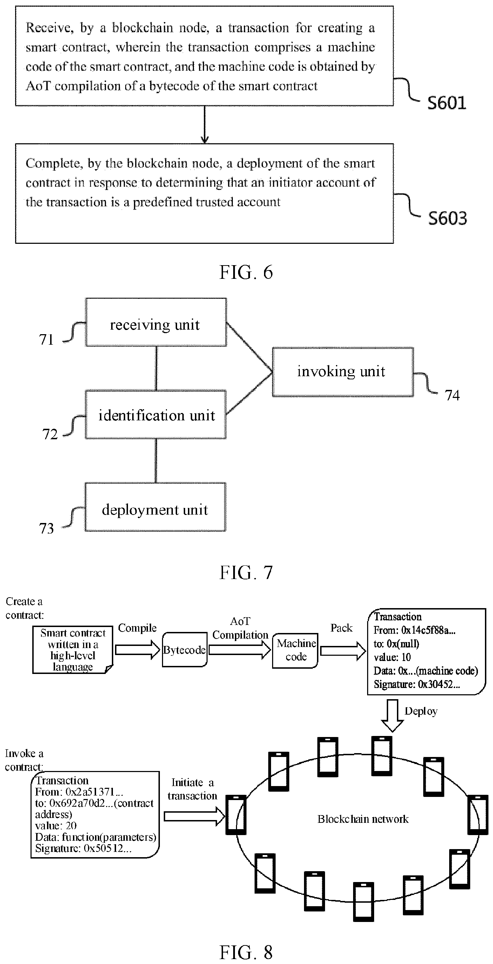

As mentioned earlier, the JVM has the advantages of cross-platform portability and the needs to improve performance. Similarly, the EVM in the blockchain can also use technology such as the JIT and the AoT to improve the performance of executing a smart contract. For example, before the smart contract is deployed onto the blockchain, AoT compilation will be performed first, and the machine code obtained after compilation is stored on the blockchain to complete the deployment of the contract, such as the process shown in FIG. 8. The deployed contract can have a specific address on the blockchain. In this way, the transaction for creating a contract initiated by the client device can include a machine code of the contract. For example, when the client device compiles the smart contract written in a high-level language into a bytecode, AoT compilation can be performed locally so as to obtain a machine code. The process of executing the contract on the blockchain (or the process of invoking the smart contract), for example, can be a client device (which can be different from the client device that created the smart contract) directly invoking the machine code on the blockchain compiled by AoT and executing. Here, in the transaction of invoking the contract, generally the pointed address (that is, the address pointed by the "to" field) can be an address of the invoked contract. Because the AoT compilation in this embodiment is completed before the smart contract is stored on the blockchain, it can be referred to as "off-chain AoT" for short. The off-chain AoT compilation process can perform optimization of a plurality of codes, in this way, the efficiency of executing the contract on-chain can be greatly improved. However, the disadvantage is also obvious, i.e. the processor architecture and operating environment of the deployed target node need to be obtained in advance for off-chain AoT, otherwise it is likely that the machine code stored on the blockchain cannot be executed on the target node subsequently. Also, in order to adapt to a plurality of different target nodes, the AoT compilation may be needed to turn into a plurality of different machine codes. In this way, the size of the machine code after AoT compilation will be much larger than the original size of the bytecode of the smart contract, increasing the amount of data to be stored on the blockchain and increasing the storage overhead.

Provided in the present specification is an embodiment of a method for deploying a smart contract, as shown in FIG. 6, including:

At S601, a blockchain node receives a transaction for creating the smart contract, wherein the transaction includes a machine code of the smart contract, and the machine code is obtained by AoT compilation of a bytecode of the smart contract.

Users can write smart contracts in a high-level language locally. The written smart contract can be compiled by a compiler adapted to a high-level language to get the bytecode. Then the bytecode of the compiled smart contract obtained by the compiler can be compiled into a machine code via a client device, then the machine code of the smart contract can be packaged into a transaction via the client device and sent to a blockchain network. For example, the format of a transaction is shown in FIGS. 3 to 5, where the machine code of the smart contract that needs to be created can be held in the "data" field of the transaction.

The users can also write smart contracts in high-level languages on a first blockchain node, which can also compile the smart contracts written in the high-level languages by using a compiler to generate a bytecode, and the first blockchain node can further compile the bytecode into a machine code. Furthermore, users can write smart contracts in high-level languages on a first blockchain node, which can also compile the smart contracts written in the high-level languages to generate a bytecode; and a second blockchain node further compiles the bytecode generated by the first blockchain node into a machine code. Then, the client device can first obtain a machine code of the smart contract from the first blockchain node or the second blockchain node, and then package the machine code of the smart contract into a transaction, send to a blockchain network.

When a bytecode of the smart contract is compiled into a machine code, the bytecode of the smart contract can be converted into a machine code through AoT compilation. The AoT compilation technology can upgrade the performance in executing a smart contract, specifically, correlation of backward and forward of a program code can be used together for compilation and obtaining a machine code after optimizing compilation. For the machine code through the optimizing compilation, the execution efficiency will generally be higher than that of directly translated machine code. On one hand, by providing hardware and environment information of the blockchain node to an AoT engine, a machine code obtained through compilation can have hardware + environment optimizations, which can specifically include optimizations during the process of generating a machine code, including instruction-level optimizations, register allocation and optimizations, etc. On the other hand, the AoT engine can analyze context information, such as branch jump statements executed in the current function, to identify which of these is the most likely to jump, thereby adjusting this most likely jump statement to the top, such that there can be a higher probability of hitting the statement in that branch first during execution; the compiler optimization process can also perform dead code elimination through data flow analysis and/or active variable analysis, e.g. eliminating branches that will not be reached, in addition, the compiler optimization process can include optimization of loop statements, common word expression substitution, etc.

At S603, the blockchain node completes a deployment of the smart contract in response to determining that an initiator account of the transaction is a predefined trusted account.

As mentioned earlier, a user can submit a transaction for creating a smart contract to a blockchain network via a client device, and the user is the initiator of the transaction. In a blockchain scenario, user information can be maintained by way of an account, and the same corresponding account exists for the initiator, i.e. the initiator account. Information about an initiator account is recorded in a transaction. For example, in the embodiment shown in FIG. 3, Bob is the initiator of a transaction and the information about the initiator account is recorded in the "From" field of the transaction.

Compared to a bytecode, a machine code can perform much more operations and is therefore a relatively greater threat to the chain. For example, by tampering with a machine code of the smart contract, so that when the smart contract is invoked, the machine code may be run to read private data stored on a blockchain node, for example, private data within the Trusted Execution Environment (TEE) deployed on the blockchain node, etc., and this may even affect the normal operation of the blockchain node and undermine the security and stability of the blockchain network. Therefore, when a transaction creating a smart contract contains a bytecode of the smart contract, a blockchain node can place no restrictions on an initiator account, allowing any blockchain account to deploy the bytecode of the smart contract to a blockchain; when the transaction creating the smart contract contains a machine code of the smart contract, the blockchain node needs to place restrictions on the initiator account, ensuring that only trusted accounts can deploy the machine code of the smart contract to the blockchain.

A blockchain node can identify whether an initiator account is a trusted account based on an account address. A blockchain node can read an account address of an initiator account from a transaction, therefore in a case that an account address of the initiator account is recorded in a predefined trusted account list, determining that the initiator account is a trusted account. A blockchain node can compare an account address of an initiator account with that in a trusted account list by running a chain code, and if the account address of the initiator account is recorded in the trusted account list, the blockchain node can determine that the initiator account is a trusted account. Or, a trusted account list can be recorded in a system contract in which a blockchain node can invoke and send the system contract an account address of an initiator account, enable a contract code of the system contract to be executed to compare the account address of the initiator account with that in the trusted account list, and then the blockchain node receives an identification result from the system contract which is used to indicate whether the account address of the initiator account is recorded in the trusted account list.

If a blockchain node identifies if an account address of an initiator account is recorded in a trusted account list by invoking a system contract, the blockchain node needs to initiate an invoking of the system contract. In one case, the transaction for creating a smart contract can contain a contract address of the system contract, enabling a blockchain node to invoke the contract address during the execution of the transaction. In the another case, a chain code of the blockchain node can contain a contract address of the system contract and an invoking logic for the system contract, wherein a trigger condition for the invoking logic can include: determining, by a blockchain node, the type of a transaction as contract deployment type, e.g. the "to" field of a transaction of the contract deployment type is null. Then, the blockchain node can automatically trigger an invoking of the system contract when the blockchain node receives a transaction of the contract deployment type. And if the blockchain node only intends to restrict the deployment behavior of a smart contract of the machine code type, and does not need to restrict the deployment behavior of the smart contract of the bytecode type or other types, then the trigger condition for the invoking logic can further include: a transaction of the contract deployment type contains a machine code of the smart contract, so that only when the blockchain node receives a transaction containing the machine code and of the contract deployment type, the invoking of the system contract can be automatically triggered.

A blockchain account can determine if an initiator account is a trusted account based on signatures. A blockchain node can obtain a signature of an initiator account for a transaction, so that in a case that the signature is successfully verified by a public key corresponding to any trusted account in a predefined trusted account list, determining, by the blockchain node, the initiator account is a trusted account. A blockchain node can verify a signature for a transaction by running a chain code with a public key of a trusted account contained in a trusted account list, and in a case that the signature for the transaction is successfully verified by the public key corresponding to any trusted account in the trusted account list, the blockchain node can determine that the initiator account is a trusted account. Or, a trusted account list or a public key corresponding to each trusted account in the trusted account list is recorded in a system contract, while the blockchain can invoke the system contract and send the system contract a signature of an initiator account for a transaction, enable a contract code of the system contract to be executed to verify the signature by the public key corresponding to each trusted account in the trusted account list, and then the blockchain node receives an identification result returned by the system contract, and the identification result is used to indicate whether the signature is successfully verified by the public key corresponding to any trusted account in the trusted account list.

When a blockchain node verifies a signature of a transaction by invoking a system contract, similar to the previously-mentioned: In one case, the transaction for creating a smart contract can contain a contract address of the system contract to enable a blockchain node to invoke of the contract address during the execution of the transaction. In the another case, a chain code of the blockchain node can contain a contract address of the system contract and an invoking logic for the system contract, wherein a trigger condition for the invoking logic can include: determining, by a blockchain node, the type of a transaction as contract deployment type; or a trigger condition for the invoking logic can further include: a transaction of the contract deployment type contains a machine code of the smart contract, so that only when the blockchain node receives a transaction containing the machine code and of the contract deployment type, the invoking of the system contract can be automatically triggered.

A system contract is a special smart contract. For example, a system contract can be deployed in a genesis block. Or, although the system contract is deployed in a non-genesis block, management authorities of the system contract belong to a blockchain administrator, i.e. the system contract is deployed by the blockchain administrator and only the blockchain administrator can perform operations such as version updates to the system contract, while different blockchain accounts can only invoke the system contract. Due to the involvement of the deployment operation of a machine code of the smart contract, usually a system contract is used to ensure that the initiator account is accurately determined to be a trusted account. Of course, even ordinary smart contracts can also be used to implement the relevant functions implemented in the system contract for determining whether the initiator account is a trusted account, and the present specification does not limit this.

In Ethereum, and public chain, consortium chain or private chain systems with similar principles, blockchain nodes can initiate a consensus on a batch of transactions. The batch of transactions can include a transaction for creating a smart contract as described above. After reaching a consensus, generally, each consensus node locally stores a machine code of the smart contract to be created. Each consensus node can locally execute the transaction of creating the smart contract, and create a corresponding contract account; and create an address for the contract account according to the same rules, and the address created by each consensus node for the same contract are the same. In this way, the deployment of the contract is completed.

Preferably, the storing is caching, and by caching to the memory, responses can be made more quickly later. Specifically, the memory can be a cache area allocated in a virtual machine. Of course, even if storing to a disk, the response speed can be improved to some extent in many cases.

When the deployment of the smart contract is completed, invocation of the contract can be provided. In this way, a client device (which may be different from the client device that initiated the transaction to create a contract in S601) can initiate an invocation to the contract. For example, the client device initiates a transaction, where the "to" field contains the address of the deployed smart contract, and the "data" field can include the input parameters and the methods of the invoked contract, thus enabling the invoking of the deployed smart contract. In general, after a batch of transactions, including the transaction that invoked the contract, pass a consensus, each consensus node executes the transactions separately. In the process of invoking a contract by the blockchain node, in a case where the machine code of the smart contract is stored, the blockchain node can significantly increase the speed of executing the smart contract because the machine code is directly executable by the CPU (under the control of the OS). Furthermore, the situation where the machine code of the smart contract is cached in memory can further increase the speed of executing the smart contract. Of course, even if storing to a disk, the response speed can be improved to some extent. Executing, by the blockchain node, the machine code, can specifically be executing a machine code corresponding to an invoked function in the contract stored.

For the machine code in the present specification, in addition to the EVM, there are also WASM (Web Assembly) virtual machine and JSVM (JavaScript Virtual Machine), etc., and there is no limitation herein.

It should be noted that the blockchain node in S601 above, may differ from the blockchain node in S603. This is because, the blockchain as a distributed system, the nodes that receive transactions and the nodes that initiate consensus and execute transactions can be different nodes or, of course, the same nodes.

The following describes embodiments of a blockchain node for deploying a smart contract of the present specification, as shown in FIG. 7, including:
a receiving unit 71, configured to receive a transaction for creating the smart contract, wherein the transaction includes a machine code of the smart contract, and the machine code is obtained by AoT compilation of a bytecode of the smart contract;
an identification unit 72, configured to identify whether an initiator account of the transaction is a predefined trusted account;
a deployment unit 73, configured to complete a deployment of the smart contract in response to determining that an initiator account of the transaction is the predefined trusted account.

Optionally, compiling the bytecode of the smart contract into the machine code through AoT includes:
performing optimizing compilation in a process of the AoT compilation of the bytecode of the smart contract.

Optionally, compiling the bytecode of the smart contract into the machine code includes:
compiling, by a client device that submits the transaction, the bytecode of the smart contract into the machine code;
compiling, by the blockchain node, the bytecode of the smart contract into the machine code; or
compiling, by another blockchain node different from the blockchain node, the bytecode of the smart contract into the machine code.

Optionally, the identification unit 72 is specifically used for:
reading an account address of the initiator account from the transaction;
determining that the initiator account is a trusted account in a case that the account address of the initiator account is recorded in a predefined trusted account list.

Optionally, the trusted account list is recorded in a system contract, and the blockchain node further includes:
an invoking unit 74, configured to invoke the system contract, and send the account address of the initiator account to the system contract; receive an identification result returned by the system contract, wherein the identification result is used to indicate whether the account address of the initiator account is recorded in the trusted account list.

Optionally, the identification unit 72 is specifically used for:
obtaining a signature of the initiator account for the transaction; and
determining that the initiator account is a trusted account in a case that the signature is successfully verified by a public key corresponding to any trusted account in a predetermined trusted account list.

Optionally, the trusted account list or a public key corresponding to each trusted account in the trusted account list is recorded in a system contract, and the blockchain node further includes:
an invoking unit 74, configured to invoke the system contract, and send the signature of the initiator account for the transaction to the system contract; receive an identification result returned by the system contract, wherein the identification result is used to indicate whether the signature is successfully verified by the public key corresponding to any trusted account in the trusted account list.

Optionally, the invoking unit 74 invoking the system contract includes:
reading a contract address of the system contract from the transaction, and invoking the system contract based on the contract address; or
invoking the system contract according to the contract address of the system contract defined in a chain code in response to determining that a type of the transaction is a contract deployment type or a transaction of the contract deployment type includes the machine code of the smart contract.

Optionally, the system contract is deployed in a genesis block; or, a management authority of the system contract is a blockchain administrator.

The present specification further provides embodiments of a blockchain node, including:
a processor, and
a memory having programs stored thereon, wherein the programs are executed by the processor to implement a smart contract according to the above-mentioned method.

The present specification further provides embodiments of a storage media for storing programs, wherein the programs are executed to implement the above-mentioned method.

The system, device, module, or unit illustrated in the previous embodiments can be implemented by using a computer chip or an entity, or can be implemented by using a product having a certain function. A typical implementation device is a computer. The computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

In a typical configuration, a computing device includes one or more processors (CPU), one or more input/output interfaces, one or more network interfaces, and one or more memories.

The memory can include a non-persistent memory, a random access memory (RAM), a nonvolatile memory, and/or another form that are in a computer readable medium, for example, a read-only memory (ROM) or a flash memory (flash RAM). The memory is an example of the computer readable medium.

The computer readable medium includes persistent, non-persistent, removable, and irremovable media that can store information by using any method or technology. The information can be a computer readable instruction, a data structure, a program module, or other data. Examples of the computer storage media include but are not limited to a phase-change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage, a quantum memory, a graphene-based storage media or another magnetic storage device, or any other non-transmission medium. The computer storage media can be used to store information accessible by a computing device. As described in the present specification, the computer readable medium does not include computer-readable transitory media such as a modulated data signal and a carrier.

It is worthwhile to further note that the terms "include", "comprise", or their any other variants are intended to cover a non-exclusive inclusion, so that a process, a method, a product or a device that includes a list of elements not only includes those elements but also includes other elements that are not expressly listed, or further includes elements inherent to such process, method, product or device. An element described by "includes a ..." further includes, without more constraints, another same or identical element in the process, method, product, or device that includes the said element.

Specific embodiments of the present specification are described above. Other embodiments fall within the scope of the appended claims. In some situations, the actions or steps described in the claims can be performed in an order different from the order in the embodiments and the desired results can still be achieved. In addition, the process depicted in the accompanying drawings does not necessarily require a particular order or a sequential order as shown to achieve the desired results. In some embodiments, multitasking and parallel processing are also possible or may be advantageous.

The terms used in one or more embodiments of the present specification are for the purpose of describing particular embodiments only and are not intended to limit one or more embodiments of the present specification. The singular forms of "a", "said" and "the" used in one or more embodiments of the present specification and the appended claims are also intended to include the plural forms, unless other meanings are clearly indicated by the context. It should also be understood that the term "and/or" used herein refers to and includes any or all possible combinations of one or more associated listed items.

It shall be understood that although the terms first, second, third, etc. may be used to describe various information in one or more embodiments of the present specification, the information should not be limited to these terms. These terms are only used to distinguish the information of the same type from each other. For example, the first information can also be referred to as the second information, and similarly, the second information can also be referred to as the first information without departing from the scope of one or more embodiments of the present specification. Depending on the context, the word "if" used herein can be explained as "in the case of", "when" or "in response to determine".

The previous descriptions are preferred embodiments of one or more embodiments of the present specification, and are not intended to limit one or more embodiments of the present specification. Any modification, equivalent replacement, or improvement made shall fall within the scope of the claims in one or more embodiments of the present specification.

## Claims

1. A method of deploying a smart contract, comprising:
receiving (S601), by a blockchain node, a transaction for creating the smart contract, wherein the transaction comprises a machine code of the smart contract, and the machine code is obtained by Ahead of Time, AoT, compilation of a bytecode of the smart contract;
completing (S603), by the blockchain node, a deployment of the smart contract in response to determining that an initiator account of the transaction is a predefined trusted account, the determining comprising:
reading, by the blockchain node, an account address of the initiator account from the transaction;
determining, by the blockchain node, that the initiator account is a trusted account in a case that the account address of the initiator account is recorded in a predefined trusted account list, wherein the trusted account list is recorded in a system contract, and the method further comprises:
invoking, by the blockchain node, the system contract, and sending the account address of the initiator account to the system contract; and
receiving, by the blockchain node, an identification result returned by the system contract, wherein the identification result is used to indicate whether the account address of the initiator account is recorded in the trusted account list.

2. The method according to claim 1, wherein compiling the bytecode of the smart contract into the machine code through AoT compilation comprises:
performing optimizing compilation in a process of the AoT compilation of the bytecode of the smart contract.

3. The method according to claim 1, wherein compiling the bytecode of the smart contract into the machine code comprises:
compiling, by a client device that submits the transaction, the bytecode of the smart contract into the machine code; or
compiling, by the blockchain node, the bytecode of the smart contract into the machine code; or
compiling, by another blockchain node different from the blockchain node, the bytecode of the smart contract into the machine code.

4. The method according to claim 1, wherein determining, by the blockchain node, the initiator account of the transaction is the predefined trusted account comprises:
obtaining, by the blockchain node, a signature of the initiator account for the transaction; and
determining, by the blockchain node, the initiator account is a trusted account in a case that the signature is successfully verified by a public key corresponding to any trusted account in the trusted account list.

5. The method according to claim 4, wherein the trusted account list or a public key corresponding to each trusted account in the trusted account list is recorded in the system contract, and the method further comprises:
invoking, by the blockchain node, the system contract, and sending the signature of the initiator account for the transaction to the system contract;
receiving, by the blockchain node, an identification result returned by the system contract, wherein the identification result is used to indicate whether the signature is successfully verified by the public key corresponding to any trusted account in the trusted account list.

6. The method according to claim 1 or 5, wherein invoking, by the blockchain node, the system contract comprises:
reading, by the blockchain node, a contract address of the system contract from the transaction, and invoking the system contract based on the contract address; or
invoking, by the blockchain node, the system contract according to the contract address of the system contract defined in a chain code in response to determining that a type of the transaction is a contract deployment type or a transaction of the contract deployment type comprises the machine code of the smart contract.

7. The method according to claim 1 or 5, wherein the system contract is deployed in a genesis block, or a management authority of the system contract is a blockchain administrator.

8. A blockchain node of deploying a smart contract, configured to implement a method according to any of claims 1 to 7.

9. A storage media for storing a program, wherein the program is executed to perform operations according to any of claims 1 to 7.

## Patentansprüche

1. Verfahren zum Bereitstellen eines Smart Contracts, umfassend:
Empfangen (S601), durch einen Blockchain-Knoten, einer Transaktion zum Erstellen des Smart Contracts, wobei die Transaktion einen Maschinencode des Smart Contracts umfasst und der Maschinencode durch vorausschauende ("Ahead of Time"-, AoT-) Kompilierung eines Bytecodes des Smart Contracts erhalten wird;
Abschließen (S603), durch den Blockchain-Knoten, einer Bereitstellung des Smart Contracts als Reaktion auf ein Bestimmen, dass ein Initiatorkonto der Transaktion ein vordefiniertes vertrauenswürdiges Konto ist, wobei das Bestimmen umfasst:
Lesen, durch den Blockchain-Knoten, einer Kontoadresse des Initiatorkontos aus der Transaktion;
Bestimmen, durch den Blockchain-Knoten, dass das Initiatorkonto ein vertrauenswürdiges Konto ist, falls die Kontoadresse des Initiatorkontos in einer vordefinierten Liste vertrauenswürdiger Konten aufgezeichnet ist, wobei die Liste vertrauenswürdiger Konten in einem Systemvertrag aufgezeichnet ist und das Verfahren ferner umfasst:
Aufrufen, durch den Blockchain-Knoten, des Systemvertrags und Senden der Kontoadresse des Initiatorkontos an den Systemvertrag; und
Empfangen, durch den Blockchain-Knoten, eines Identifikationsergebnisses, das durch den Systemvertrag zurückgegeben wird, wobei das Identifikationsergebnis verwendet wird, um anzugeben, ob die Kontoadresse des Initiatorkontos in der Liste vertrauenswürdiger Konten aufgezeichnet ist.

2. Verfahren nach Anspruch 1, wobei das Kompilieren des Bytecodes des Smart Contracts in den Maschinencode durch AoT-Kompilierung umfasst:
Durchführen einer optimierenden Kompilierung in einem Prozess der AoT-Kompilierung des Bytecodes des Smart Contracts.

3. Verfahren nach Anspruch 1, wobei das Kompilieren des Bytecodes des Smart Contracts in den Maschinencode umfasst:
Kompilieren, durch eine Client-Vorrichtung, die die Transaktion übermittelt, des Bytecodes des Smart Contracts in den Maschinencode; oder
Kompilieren, durch den Blockchain-Knoten, des Bytecodes des Smart Contracts in den Maschinencode; oder
Kompilieren, durch einen anderen Blockchain-Knoten, der sich von dem Blockchain-Knoten unterscheidet, des Bytecodes des Smart Contracts in den Maschinencode.

4. Verfahren nach Anspruch 1, wobei das Bestimmen, durch den Blockchain-Knoten, dass das Initiatorkonto der Transaktion das vordefinierte vertrauenswürdige Konto ist, umfasst:
Erhalten, durch den Blockchain-Knoten, einer Signatur des Initiatorkontos für die Transaktion; und
Bestimmen, durch den Blockchain-Knoten, dass das Initiatorkonto ein vertrauenswürdiges Konto ist, falls die Signatur durch einen öffentlichen Schlüssel, der einem beliebigen vertrauenswürdigen Konto in der Liste vertrauenswürdiger Konten entspricht, erfolgreich verifiziert wird.

5. Verfahren nach Anspruch 4, wobei die Liste vertrauenswürdiger Konten oder ein öffentlicher Schlüssel, der jedem vertrauenswürdigen Konto in der Liste vertrauenswürdiger Konten entspricht, in dem Systemvertrag aufgezeichnet ist und das Verfahren ferner umfasst:
Aufrufen, durch den Blockchain-Knoten, des Systemvertrags und Senden der Signatur des Initiatorkontos für die Transaktion an den Systemvertrag;
Empfangen, durch den Blockchain-Knoten, eines Identifikationsergebnisses, das durch den Systemvertrag zurückgegeben wird, wobei das Identifikationsergebnis verwendet wird, um anzugeben, ob die Signatur durch den öffentlichen Schlüssel, der einem beliebigen vertrauenswürdigen Konto in der Liste vertrauenswürdiger Konten entspricht, erfolgreich verifiziert wird.

6. Verfahren nach Anspruch 1 oder 5, wobei das Aufrufen, durch den Blockchain-Knoten, des Systemvertrags umfasst:
Lesen, durch den Blockchain-Knoten, einer Vertragsadresse des Systemvertrags aus der Transaktion und Aufrufen des Systemvertrags basierend auf der Vertragsadresse; oder
Aufrufen, durch den Blockchain-Knoten, des Systemvertrags gemäß der Vertragsadresse des Systemvertrags, die in einem Kettencode definiert ist, als Reaktion auf ein Bestimmen, dass ein Typ der Transaktion ein Vertragsbereitstellungstyp ist oder eine Transaktion des Vertragsbereitstellungstyps den Maschinencode des Smart Contracts umfasst.

7. Verfahren nach Anspruch 1 oder 5, wobei der Systemvertrag in einem Genesis-Block bereitgestellt wird oder eine Verwaltungsautorität des Systemvertrags ein Blockchain-Administrator ist.

8. Blockchain-Knoten zum Bereitstellen eines Smart Contracts, der eingerichtet ist, ein Verfahren nach einem der Ansprüche 1 bis 7 zu implementieren.

9. Speichermedium zum Speichern eines Programms, wobei das Programm ausgeführt wird, um Operationen nach einem der Ansprüche 1 bis 7 durchzuführen.

## Revendications

1. Procédé de déploiement d'un contrat intelligent, comprenant :
la réception (S601), par un noeud de chaîne de blocs, d'une transaction pour créer le contrat intelligent, dans lequel la transaction comprend un code machine du contrat intelligent, et le code machine est obtenu par compilation à l'avance, AoT, d'un bytecode du contrat intelligent ;
l'achèvement (S603), par le noeud de chaîne de blocs, d'un déploiement du contrat intelligent en réponse à la détermination qu'un compte initiateur de la transaction est un compte de confiance prédéfini, la détermination comprenant :
la lecture, par le noeud de chaîne de blocs, d'une adresse de compte du compte initiateur à partir de la transaction ;
la détermination, par le noeud de chaîne de blocs, que le compte initiateur est un compte de confiance dans un cas où l'adresse de compte du compte initiateur est enregistrée dans une liste de comptes de confiance prédéfinie, dans lequel la liste de comptes de confiance est enregistrée dans un contrat système, et le procédé comprend en outre :
l'invocation, par le noeud de chaîne de blocs, du contrat système, et l'envoi de l'adresse de compte du compte initiateur au contrat système ; et
la réception, par le noeud de chaîne de blocs, d'un résultat d'identification renvoyé par le contrat système, dans lequel le résultat d'identification est utilisé pour indiquer si l'adresse de compte du compte initiateur est enregistrée dans la liste de comptes de confiance.

2. Procédé selon la revendication 1, dans lequel la compilation du bytecode du contrat intelligent dans le code machine par compilation AoT comprend :
la réalisation d'une compilation d'optimisation dans un processus de la compilation AoT du bytecode du contrat intelligent.

3. Procédé selon la revendication 1, dans lequel la compilation du bytecode du contrat intelligent dans le code machine comprend :
la compilation, par un dispositif client qui soumet la transaction, du bytecode du contrat intelligent en le code machine ; ou
la compilation, par le noeud de chaîne de blocs, du bytecode du contrat intelligent en le code machine ; ou
la compilation, par un autre noeud de chaîne de blocs différent du noeud de chaîne de blocs, du bytecode du contrat intelligent en le code machine.

4. Procédé selon la revendication 1, dans lequel la détermination, par le noeud de chaîne de blocs, que le compte initiateur de la transaction est le compte de confiance prédéfini comprend :
l'obtention, par le noeud de chaîne de blocs, d'une signature du compte initiateur pour la transaction ; et
la détermination, par le noeud de chaîne de blocs, que le compte initiateur est un compte de confiance dans un cas où la signature est vérifiée avec succès par une clé publique correspondant à un compte de confiance quelconque dans la liste de comptes de confiance.

5. Procédé selon la revendication 4, dans lequel la liste de comptes de confiance ou une clé publique correspondant à chaque compte de confiance dans la liste de comptes de confiance est enregistrée dans le contrat système, et le procédé comprend en outre :
l'invocation, par le noeud de chaîne de blocs, du contrat système, et l'envoi de la signature du compte initiateur pour la transaction au contrat système ;
la réception, par le noeud de chaîne de blocs, d'un résultat d'identification renvoyé par le contrat système, dans lequel le résultat d'identification est utilisé pour indiquer si la signature est vérifiée avec succès par la clé publique correspondant à un compte de confiance quelconque dans la liste de comptes de confiance.

6. Procédé selon la revendication 1 ou 5, dans lequel l'invocation, par le noeud de chaîne de blocs, du contrat système comprend :
la lecture, par le noeud de chaîne de blocs, d'une adresse de contrat du contrat système à partir de la transaction, et l'invocation du contrat système sur la base de l'adresse de contrat ; ou
l'invocation, par le noeud de chaîne de blocs, du contrat système en fonction de l'adresse de contrat du contrat système définie dans un code de chaîne en réponse à la détermination qu'un type de la transaction est un type de déploiement de contrat ou qu'une transaction du type de déploiement de contrat comprend le code machine du contrat intelligent.

7. Procédé selon la revendication 1 ou 5, dans lequel le contrat système est déployé dans un bloc de genèse, ou qu'une autorité de gestion du contrat système est un administrateur de chaîne de blocs.

8. Noeud de chaîne de blocs de déploiement d'un contrat intelligent, configuré pour mettre en oeuvre un procédé selon l'une quelconque des revendications 1 à 7.

9. Support de stockage pour stocker un programme, dans lequel le programme est exécuté pour réaliser des opérations selon l'une quelconque des revendications 1 à 7.
